# DEMANDE DE BREVET EUROPEEN

(11) **EP 0 982 606 A1**
(43) Date de publication de la demande: **01.03.2000**
(21) Numéro de dépôt: 99401668.1
(22) Date de dépôt: 05.07.1999
(51) Int. Cl.: G02B 6/12, G02B 6/42, H01S 5/026

(54) **Procédé de fabrication d'un circuit optique intégré**

(30) Priorité: 06.07.1998 FR 9808622
(71) Demandeur: ALCATEL, 75008 Paris (FR)
(72) Inventeur: Pommereau, Frédéric, 91510 Lardy (FR); Pagnod-Rossiaux, Philippe, 91180 Saint Germain Les Arpajon (FR); Renaud, Monique, 91530 Saint Chéron (FR); Martin, Bernard, 94210 La Varenne Saint Hilaire (FR); Mestric, Roland, 75014 Paris (FR)
(74) Mandataire: Fournier, Michel

(57) **Abrégé**

L'invention concerne un procédé de fabrication d'un circuit optique intégré comportant au moins un guide d'onde gravé et enterré, de type BRS, couplé à au moins un guide d'onde gravé et non enterré, de type ridge. Ce procédé consiste particulièrement à définir au préalable l'empreinte des deux types de guide, au moyen d'un masque commun, puis à définir les deux types de guide par gravures successives.

## Description

La présente invention se rapporte à un procédé de fabrication d'un circuit optique intégré comprenant des guides d'ondes ayant des structures différentes. Le circuit optique intégré fabriqué selon l'invention comprend notamment au moins un guide d'onde dit de type BRS (Buried Ridge Stripe en littérature anglo-saxonne), gravé et enterré dans une couche de gaine, et au moins un guide d'onde dit de type ridge, gravé mais non enterré.

Les circuits optiques intégrés sont conçus pour renfermer plusieurs types de composants optiques ayant des structures et des fonctions différentes. Ces circuits sont réalisés en deux temps. Dans un premier temps les différents composants actifs et/ou passifs sont intégrés sur un substrat et sont aboutés selon une méthode dite de "butt coupling" en terminologie anglo-saxonne et bien connue de l'homme de l'art. Dans un deuxième temps, les guides d'onde des différents composants sont gravés sous forme de rubans, de manière à ce qu'ils puissent assurer le confinement latéral de la lumière.

La méthode la plus répandue pour définir les rubans de guides d'onde consiste à réaliser de l'auto-alignement. Pour cela, tous les guides d'onde sont gravés simultanément, en une seule étape, en utilisant un masque unique.

Cette méthode est illustrée sur les figures lA à 1D qui schématisent un circuit optique, en perspective, au cours de ses étapes de fabrication. Un guide d'onde actif de type BRS 11 et un guide d'onde passif de type ridge 12 sont intégrés sur ce circuit.

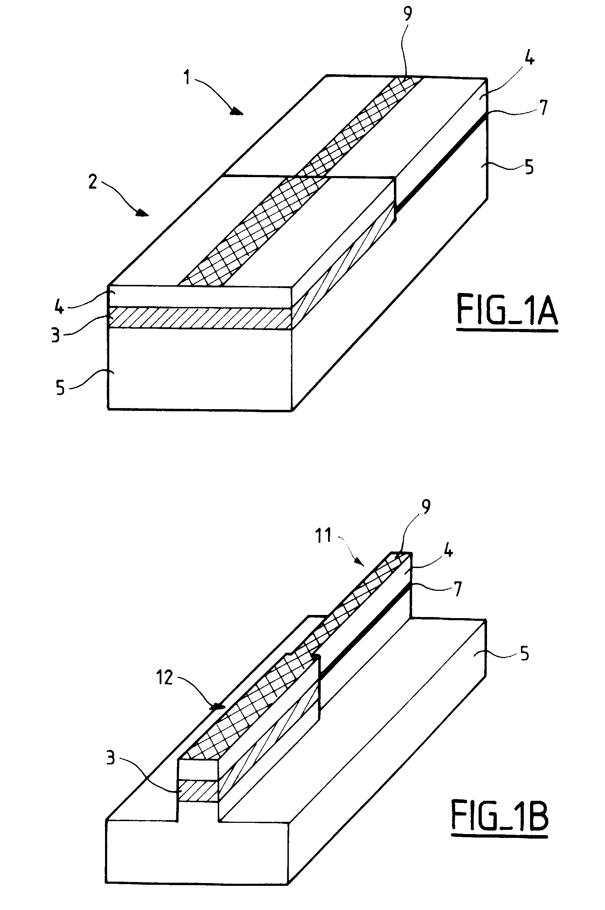

Dans un premier temps, plusieurs couches sont déposées et empilées sur un substrat 5, par exemple en matériau InP, pour former deux portions 1 et 2 tel qu' illustré sur la figure 1A. La première portion 1 est par exemple prévue pour la réalisation d'un composant actif et comporte une couche guidante 7, par exemple en matériau quaternaire d'InGaAsP ayant une largeur de bande interdite équivalente à 1,5 µm. Cette couche guidante 7 est destinée à être gravée, sous la forme d'un ou de plusieurs ruban(s), puis enterrée de manière à former un ou plusieurs guide(s) d'onde de type BRS.

La deuxième portion 2 est par exemple prévue pour la réalisation d'un composant passif et comporte une couche guidante 3, par exemple en matériau quaternaire d'InGaAsP, ayant une largeur de bande interdite équivalente à 1,1 µm. Cette couche guidante 3 est destinée à être gravée, sous la forme d'un ou de plusieurs ruban(s) afin d'obtenir un ou plusieurs guides d'onde de type ridge.

Les deux couches guidantes 3 et 7 de ces deux portions sont aboutées et encapsulées dans une couche de confinement 4, en InP par exemple. Cette couche 4 de confinement peut en outre être différente sur chaque portion. Un masque classique 9, définissant le dessin des différents guides d'onde à réaliser, est en outre positionné sur la (ou les) couche(s) de confinement 4.

L'étape suivante, illustrée sur la figure 1B, consiste ensuite à graver simultanément, ou séquentiellement, les deux portions 1 et 2, de part et d'autre du masque 9, afin de définir les rubans des différents guides d'onde. Dans l'exemple représenté sur la figure 1B, le guide d'onde de type BRS 11 et le guide d'onde de type ridge 12 sont gravés respectivement sous la forme d'un seul ruban. La gravure terminée, le masque 9 est ensuite éliminé.

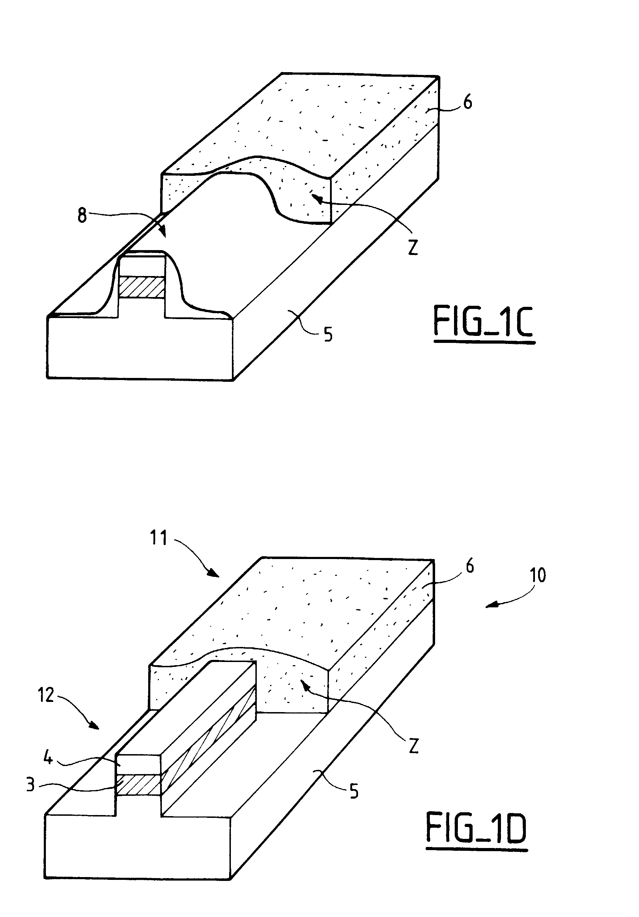

Le ruban de chaque guide d'onde 11 et 12 ayant été défini, il faut ensuite pouvoir enterrer le guide actif de type BRS 11 dans une couche de gaine, sans reboucher la partie gravée du guide d'onde de type ridge 12. Cette opération d'encapsulation du guide d'onde de type BRS est schématisée sur la figure 1C.

Pour cela, une couche de matériau diélectrique 8, en silice par exemple, est déposée sur le ruban de type ridge, afin de le protéger lors de l'opération ultérieure de reprise d'épitaxie, destinée à former une couche de confinement 6 pour enterrer le guide de type BRS. La couche de confinement 6 est par exemple réalisée en InP dopé p. Une fois que cette couche de confinement 6 a été déposée, la couche de protection 8 en silice est éliminée et on obtient un circuit optique intégré 10, tel qu'illustré sur la figure 1D, comportant un composant à guide d'onde enterré de type BRS 11 et un composant à guide d'onde de type ridge 12.

Cependant, au cours de l'opération de reprise d'épitaxie, consistant en une reprise MOCVD par exemple ("Metal Organic Chemical Vapor Deposition" en terminologie anglo-saxonne), il se forme des excroissances dans la zone de transition Z entre les deux portions 1 et 2. Ces excroissances peuvent atteindre une taille de plusieurs microns, typiquement plus de 4µm d'épaisseur et plus de 300µm de largeur.

En fait, au cours de la reprise d'épitaxie, le circuit est chauffé par des lampes à infra-rouge. Ce chauffage entraîne des réactions de décomposition des réactants sur ou au voisinage des surfaces, puis l'apparition d'un phénomène de nucléation. Or, cette nucléation n'a pas lieu sur le matériau diélectrique (en silice par exemple), si bien que la couche d'InP déposée lors de la reprise d'épitaxie ne peut pas croître sur cette couche protectrice 8 en silice. Par conséquent, tous les éléments présents au-dessus de cette couche 8 diffusent et coalescent dans la zone Z de transition, sur le matériau en InP de la couche de confinement 6 en formation. Toute la matière qui aurait dû croître sur la silice se retrouve donc dans la zone de transition Z, ce qui provoque l'apparition d'excroissances dont la taille dépend de la taille des surfaces protégées par la couche 8 de silice.

Ces excroissances engendrent des perturbations dans la suite des opérations de fabrication du circuit. Des étapes de lithographie notamment, ainsi que d'implantation ionique de la couche de gaine pour réaliser une isolation latérale, sont particulièrement difficiles à réaliser sur le circuit du fait de la présence de ces excroissances. De plus, il se crée un différentiel d'épaisseur le long du ruban de guide actif BRS, ce qui peut provoquer des disfonctionnements du guide d'onde.

D'autre part, le fait de protéger le guide ridge 3 par de la silice implique une migration des éléments P et/ou As du guide d'onde 3 vers cette couche diélectrique 8 de silice, si bien que les performances du guide d'onde, et donc du composant optique 2, se trouvent dégradées.

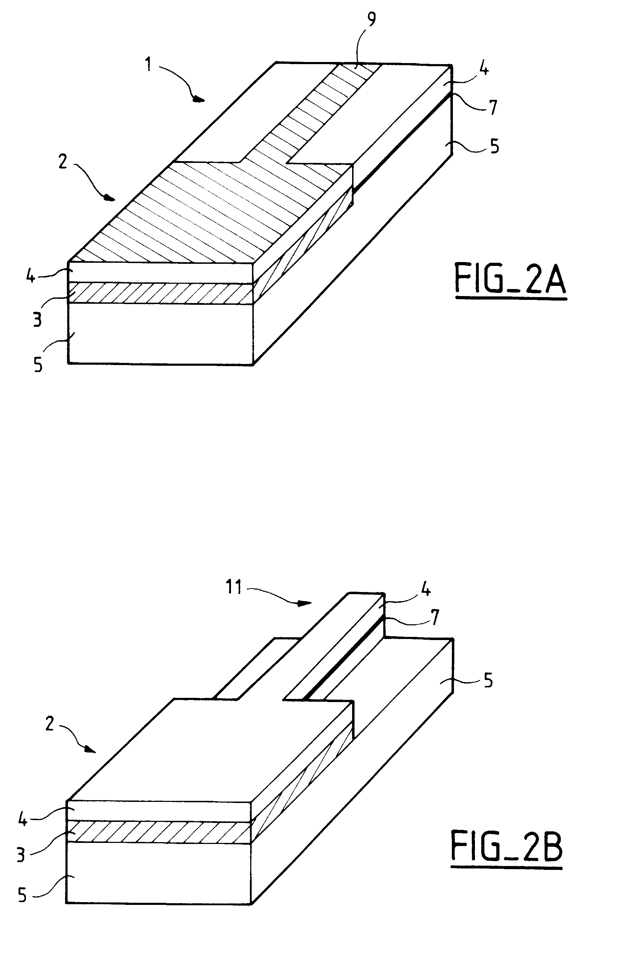

Une autre approche pour réaliser un circuit optique intégré comprenant au moins un guide d'onde de type BRS et un guide d'onde de type ridge consiste à utiliser la méthode, bien connue de l'homme de l'art, de ré-alignement telle qu'illustrée sur les figures 2A à 2D. Après avoir déposé sur un substrat 5, plusieurs couches pour former deux portions 1 et 2 ayant chacune une couche guidante respectivement 7 et 3 (figure 2A), un masque 9 est positionné sur la couche supérieure de confinement 4. Ce masque présente une forme telle qu'il recouvre toute la surface de la portion 2, par exemple réservée à la réalisation d'un guide passif de type ridge, et défini le dessin du ruban de guide d'onde de la portion 1 à graver pour l'obtention d'un guide actif de type BRS par exemple.

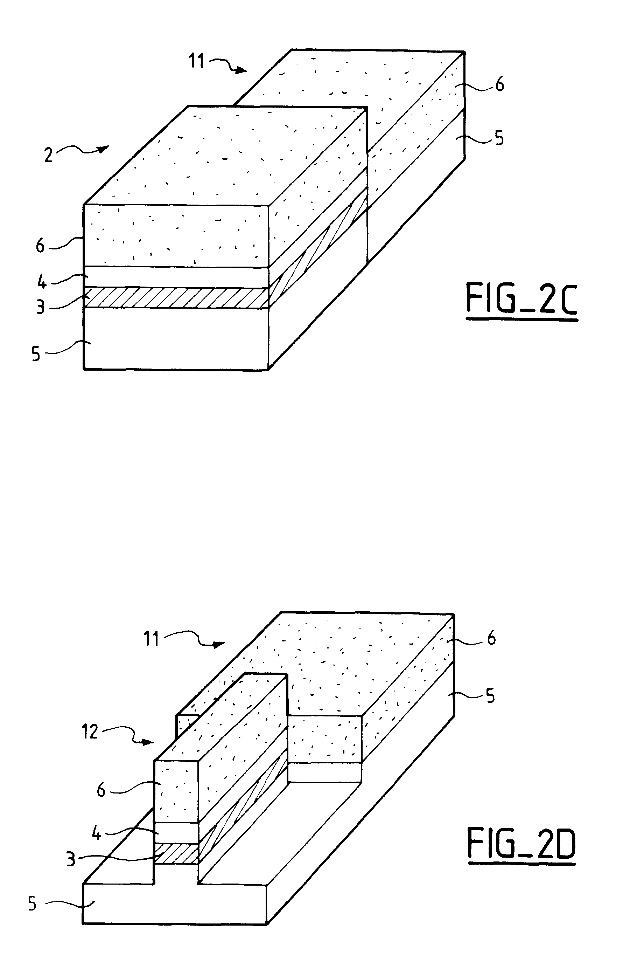

Ainsi, dans une première étape, seul le guide d'onde de type BRS 11 est gravé (figure 2B). Puis, après avoir éliminé le masque 9, une reprise d'épitaxie d'une couche 6 de confinement, en InP dopé P par exemple, est effectuée sur la totalité de la surface du circuit (figure 2C) .

La dernière étape, représentée sur la figure 2D, consiste ensuite à protéger le premier composant actif, comportant le guide BRS 11 ainsi formé par un autre masque, puis à graver la deuxième portion 2, en utilisant un masque approprié, pour définir le ruban de type ridge 12. Cependant, pour graver ce ruban de type ridge, la couche d'InP à graver est très épaisse puisqu'elle comprend d'une part la couche de protection 4 et d'autre part la couche 6 déposée lors de la reprise d'épitaxie. Typiquement, l'épaisseur totale à graver pour former le ruban ridge est au minimum de 5µm, alors qu'elle n'est que d'environ 2µm lorsque l'on utilise la méthode d'auto-alignement. Le ruban ridge obtenu (figure 2D) est donc fragilisé et se casse facilement lors du clivage des composants, si bien qu'il devient très difficile, voire même impossible, d'obtenir un bon couplage de la lumière.

Pour éviter cette fragilité du ruban ridge, une solution consisterait à ne pas déposer de couche de confinement 4 sur la couche guidante 3 de la portion 2 réservée à la réalisation du guide ridge, ou du moins à réduire l'épaisseur de cette couche de confinement 4. Dans ce cas, la couche 6 d'InP dopé p, déposée lors de la reprise d'épitaxie, est en contact direct (ou à proximité du) avec le guide d'onde 3 de type ridge. Or, dans cet exemple, le guide d'onde de type ridge 3 étant passif, il n'amplifie pas le signal lumineux, et l'InP dopé p induit des pertes de propagation plus importantes. Cette solution entraîne donc une dégradation des performances du composant passif 2 à guide ridge, et elle ne peut par conséquent pas être adoptée pour fabriquer des circuits optiques intégrés.

Un but de l'invention consiste donc à fabriquer un circuit optique intégré, comprenant au moins un guide d'onde de type BRS et au moins un guide d'onde de type ridge aboutés et définis par la méthode d'auto-alignement, tout en évitant la création d'excroissances dans la zone de transition entre les deux types de guide.

Pour atteindre ce but et pallier les inconvénients de l'art antérieur, l'invention propose plus particulièrement un procédé de fabrication d'un circuit optique intégré, comprenant au moins un guide d'onde gravé et enterré, de type BRS, couplé avec au moins un guide d'onde gravé et non enterré, de type ridge, caractérisé en ce qu'il comprend les étapes suivantes :
a- former, sur un substrat, au moins une première et une deuxième zone comprenant respectivement une première et une deuxième couche guidante, lesdites première et deuxième couches guidantes étant enterrées et aboutées,
b- former, sur lesdites première et deuxième zones, un premier masque pour définir l'empreinte desdits guides d'onde de type BRS et de type ridge,
c- protéger ladite deuxième zone par un deuxième masque et graver la première zone pour définir le guide d'onde de type BRS,
d- enlever ledit deuxième masque et faire croître une couche sur la surface des deux zones, pour former d'une part une couche de confinement enterrant le guide de type BRS dans la première zone, et d'autre part, une couche supérieure sur la deuxième zone,
e- protéger ladite première zone par un troisième masque, enlever par gravure la couche supérieure formée sur la deuxième zone, puis graver la deuxième zone en utilisant le premier masque pour définir le guide d'onde de type ridge.

Grâce à cette gravure successive des guides d'onde, et à la réalisation préalable de l'empreinte des guides d'onde au moyen d'un premier masque déposé sur les deux zones du circuit, il n'est plus nécessaire, lors de la reprise d'épitaxie, de protéger le guide de type ridge par une couche de protection en silice.

Selon une autre caractéristique de l'invention, une couche d'arrêt, vis-à-vis de la gravure du matériau de constitution de la couche supérieure formée sur ladite deuxième zone, est en outre déposée sur la deuxième zone, après la première étape a. Cette couche d'arrêt permet, lors de la gravure de la couche supérieure, de retrouver intacte la surface de la deuxième zone, ainsi que le premier masque formant l'empreinte du guide ridge à réaliser.

Selon une autre caractéristique de l'invention, le premier masque est réalisé dans un métal réfractaire. Ce métal réfractaire est non seulement résistant aux hautes températures utilisées lors de la reprise d'épitaxie pour faire croître la couche de confinement, mais il permet également la nucléation des espèces décomposées à la surface ou au voisinage de la surface. Il se crée donc, lors du dépôt de la couche de confinement, une couche supérieure polycristalline au-dessus du premier masque. La matière pouvant croître sur ce premier masque, elle ne diffuse pas vers la zone de transition entre les deux types de guide, si bien que la formation d'excroissances est évitée. Par conséquent, le phénomène de diffusion des éléments en surface, au cours de cette reprise d'épitaxie, entraînant l'apparition d'excroissances dans la zone de transition, ne se produit pas.

Selon une autre caractéristique, une couche en matériau diélectrique est déposée, avant la deuxième étape b-, sur les première et deuxième zones. Cette couche a pour rôle de former une barrière de diffusion afin d'éviter l'interdiffusion des éléments constituant les première et deuxième zones avec le métal réfractaire, et la formation d'un alliage.

D'autres particularités et avantages de l'invention apparaîtront à la lecture de la description donnée à titre d'exemple illustratif et faite en référence aux figures annexées qui représentent :
- les figures 1A à 1D, déjà décrites, des schémas en perspective d'un circuit optique intégré au cours de ses étapes de fabrication, selon un procédé de l'art antérieur,
- les figures 2A à 2D, déjà décrites, des schémas en perspective d'un autre circuit optique intégré au cours de ses étapes de fabrication, selon un autre procédé de l'art antérieur,
- les figures 3A à 9C, des schémas d'un circuit optique fabriqué selon le procédé de l'invention, au cours de ses étapes de fabrication et représenté par différentes vues.

Un mode de réalisation préféré du procédé de fabrication selon l'invention consiste à définir au préalable l'empreinte des guides d'onde au moyen d'un premier masque, et à réaliser les rubans de guides d'onde de manière successive.

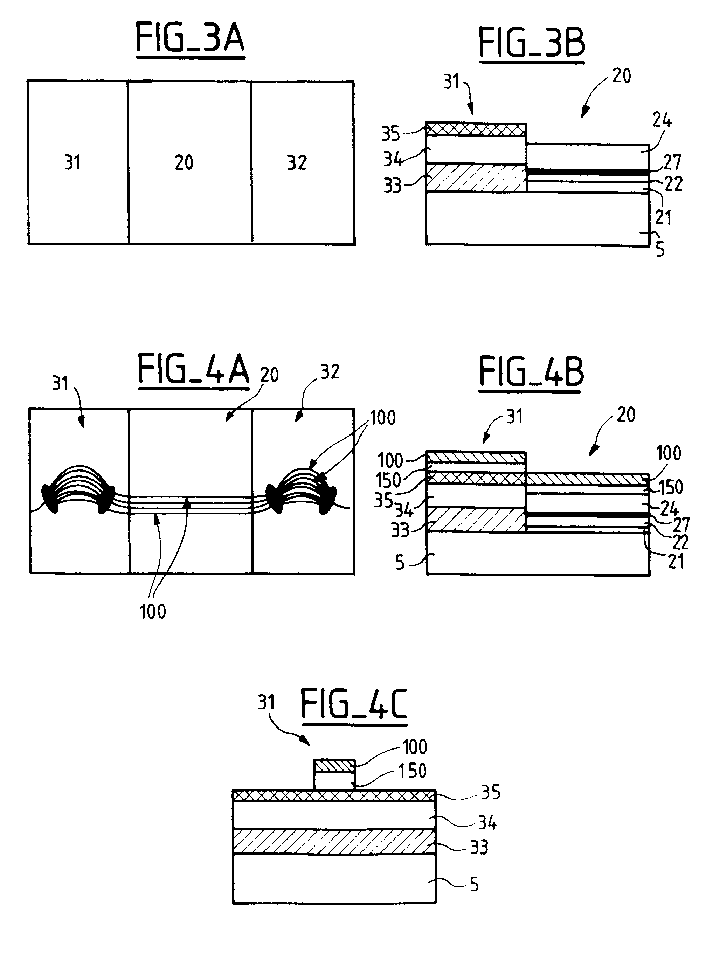

L'exemple décrit au regard des figures 3A à 9C se rapporte à un sélecteur de longueurs d'onde comprenant un composant actif, par exemple un amplificateur optique en semi-conducteur 20 (SOA), entouré par deux composants passifs, par exemple des multiplexeurs de longueurs d'onde 31, 32 (WDM) comprenant chacun plusieurs rubans de guide d'onde, chaque ruban étant associé au guidage d'une longueur d'onde spécifique.

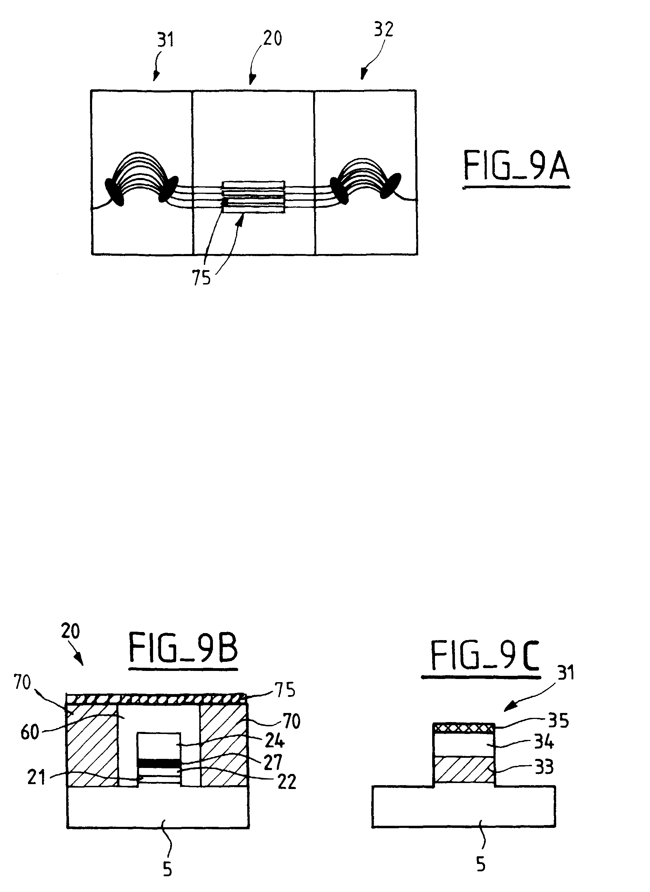

Les vues de dessus des figures 3A, 4A et 9A représentent les trois zones correspondant au composant actif SOA 20 et aux composants passifs WDM 31, 32 du sélecteur de longueur d'onde. Pour des raisons de simplification, les autres figures ne représentent que deux zones correspondant chacune au composant actif 20 et à l'un des composants passifs 31. De plus les vues en coupe latérale, toujours pour un souci de clarté, ne représentent qu'un seul ruban de guide d'onde. Mais bien sûr les composants optiques peuvent comporter plusieurs rubans, tel qu'illustré sur les vues de dessus des figures 4A et 9A.

L'invention ne se limite pas à la fabrication de ce type de circuit, elle s'applique de manière plus générale à la fabrication de n'importe quel circuit optique intégré comprenant au moins un ruban de guide d'onde gravé et enterré, de type BRS, couplé à au moins un ruban de guide d'onde gravé et non enterré, de type ridge. A titre d'exemple, l'invention s'applique à la fabrication d'interféromètres de type Sagnac, ou de type Michelson ou encore de type Mach-Zehnder incorporant des amplificateurs optiques et des circuits optiques guidés passifs, de pré-amplificateurs de type WDM, d'interrupteurs utilisant des portes optiques, ou de lasers modulateurs intégrés.

Une première étape du procédé selon l'invention consiste à former les différentes zones 20, 31, 32 correspondant respectivement aux composants actif et passifs. La figure 3A schématise une vue de dessus de cette structure et la figure 3B schématise une vue en coupe longitudinale des deux zones 20 et 31.

Ces zones sont formées sur un substrat 5. La zone 20, réservée à la réalisation du composant actif, comprend un empilement de couches 21, 22, 27, 24, dont une couche guidante 27 enterrée. Cette couche guidante 27 est par exemple réalisée dans un matériau quaternaire d'InGaAsP présentant une largeur de bande interdite équivalente à 1,5 µm. Elle peut aussi être constituée de plusieurs couches de natures différentes.

La zone 31, réservée à la réalisation du composant passif, comprend elle aussi un empilement de couches 33, 34, 35 dont une couche guidante 33 enterrée qui est par exemple réalisée dans un matériau quaternaire d'InGaAsP présentant une largeur de bande interdite équivalente à 1,1 µm.

Le substrat 5 et les couches 22, 24 d'une part, et 34 d'autre part, situés de part et d'autre des couches guidantes 27 et 33, sont réalisés dans un matériau III-V, comme InP ou GaAs par exemple. La couche 21 déposée directement sur le substrat 5, dans la zone 20, constitue par exemple une couche tampon.

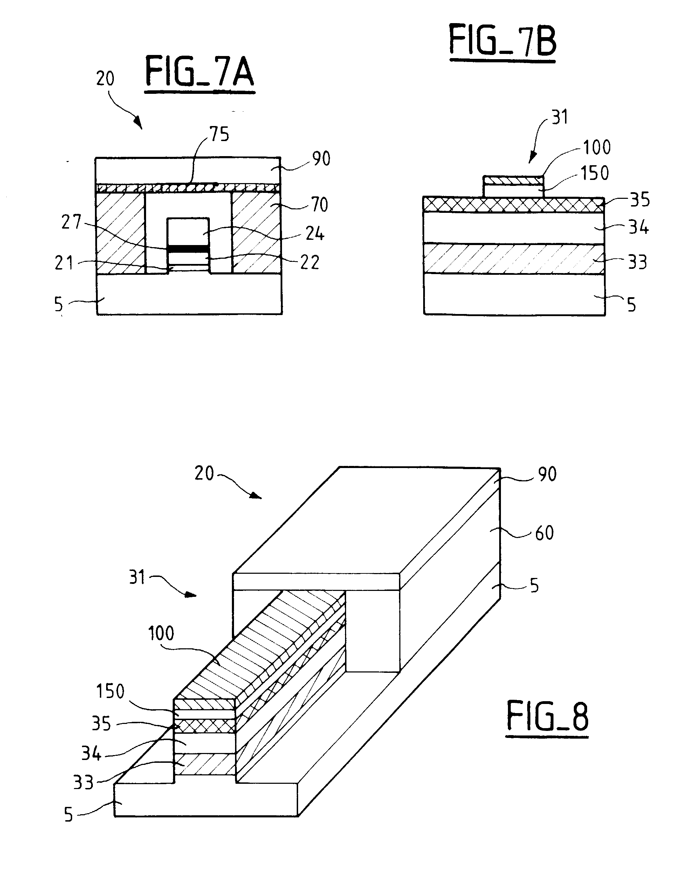

La couche supérieure 35 située dans la zone réservée au composant passif 31 constitue en fait une couche d'arrêt. Elle est par exemple réalisée en matériau quaternaire d'InGaAsP, de largeur de bande interdite équivalente à 1,25µm, et constitue une couche d'arrêt naturelle vis-à-vis de la gravure chimique du matériau InP. L'utilité d'une telle couche est décrite plus en détail en regard de la figure 7B.

Une deuxième étape du procédé selon l'invention consiste ensuite à former sur les zones passives 31,32 et active 20, un premier masque 100 destiné à être utilisé pour définir l'empreinte des rubans des guides d'onde de type ridge et de type BRS à graver.

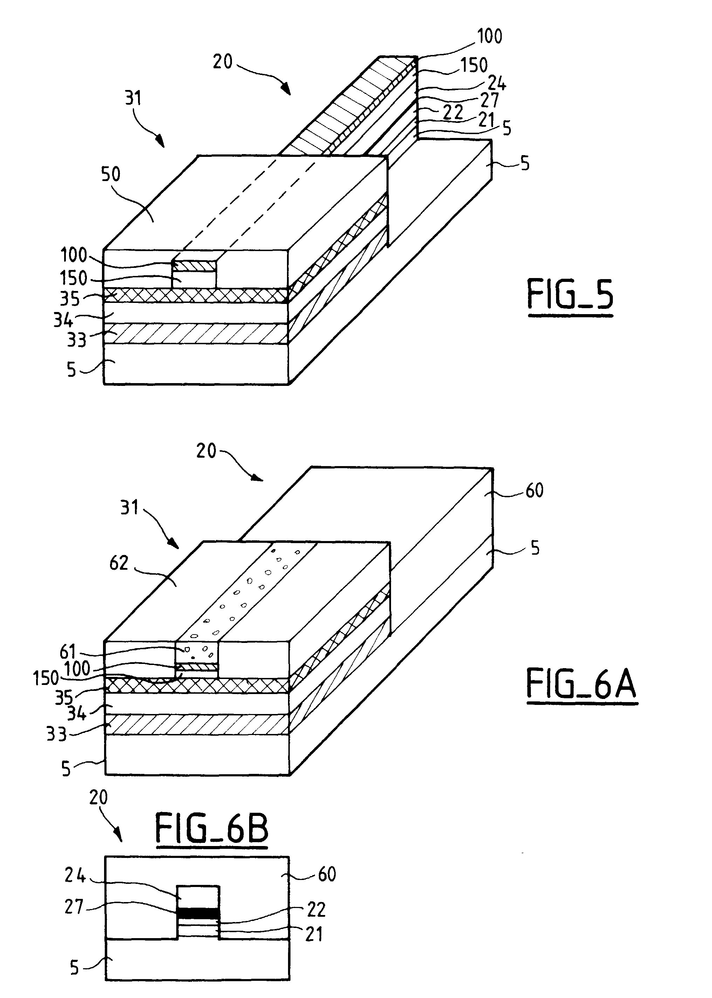

Ce masque 100 est représenté sur la vue de dessus de la figure 4A, sur la vue en coupe longitudinale de la figure 4B et sur la vue en coupe latérale de la figure 4C. Il est de préférence réalisé dans un matériau réfractaire, comme par exemple du titane, du tungstène, du molybdène, ou dans un de leurs alliages. Les raisons pour lesquelles ce premier masque 100 est réalisé en métal réfractaire sont expliquées en regard des figures 5, 6A et 6B.

D'autre part, il est possible de déposer, préalablement à la formation du premier masque 100, une couche 150 de matériau diélectrique. Cette couche diélectrique 150 est destinée à jouer le rôle de barrière de diffusion entre le métal du premier masque 100 et les couches 35 et 24, et à éviter ainsi la formation d'un alliage. Elle est par exemple réalisée en nitrure, en oxyde ou en oxy-nitrure de silicium, tel que par exemple SiO₂, Si₃N₄, SiON, ou dans un autre matériau présentant des propriétés similaires de barrière à l'interdiffusion. Le dépôt de cette couche de barrière de diffusion peut se faire indifféremment selon les techniques classiques de dépôt, c'est-à-dire par exemple par dépôt en phase vapeur assisté par plasma ou non, évaporation ou encore par pulvérisation.

Le premier masque 100 est en fait réalisé de manière classique, en deux étapes. Dans un premier temps, le métal réfractaire de constitution du masque est déposé sur la surface des zones 20, 31, 32. Une résine photosensible est ensuite déposée sur la couche métallique afin de servir de masque pour réaliser une gravure de la couche métallique et obtenir le premier masque 100 destiné à former l'empreinte des guides d'onde actifs et passifs. La gravure de la couche métallique est réalisée par exemple par un procédé de gravure ionique réactive (RIE), en utilisant par exemple un mélange SF₆/Ar. Un mélange CHF₃/0₂ peut ensuite être utilisé pour graver la couche de barrière de diffusion 150 lorsque celle-ci est déposée sur les zones 20, 31, 32, préalablement à la couche métallique. La résine photosensible utilisée en tant que masque pour cette gravure est ensuite éliminée.

Une fois l'empreinte des guides d'onde obtenue, grâce au premier masque 100, les rubans peuvent être gravés. Les rubans des guides de type BRS et de type ridge sont gravés de manière successive. Dans un premier temps la zone réservée au composant passif 31, recouverte du premier masque, est protégée par une résine photosensible 50 de manière à pouvoir graver le (ou les) ruban(s) de guide d'onde actif (figure 5). La gravure de ce(s) guide(s) est par exemple réalisée par un procédé de gravure ionique réactive en utilisant un mélange de CH₄/H₂. On obtient alors la zone 31 non gravée et au moins un ruban de guide actif tel que schématisé sur la vue en perspective de la figure 5.

La partie du premier masque 100 située sur la surface du ruban de guide BRS ainsi gravé dans la zone 20, est ensuite localement éliminée par un procédé de gravure plasma (par exemple par gravure ionique réactive) ou alors par gravure chimique au moyen d'une solution à base d'acide fluorhydrique par exemple.

L'étape suivante du procédé consiste alors à enterrer le guide d'onde actif de type BRS ainsi gravé. Pour cela, une reprise d'épitaxie est effectuée de manière à faire croître une couche de gaine 60, ou couche de confinement, destinée à enterrer le(s) ruban(s) de guide préalablement gravé(s). Cette couche de gaine 60 peut par exemple être constituée d'une première couche d'InP dopé p, puis d'une couche d'InGaAs dopée p. Ces couches sont déposées par des procédés d'épitaxie de type MOCVD (Metal Organic Chemical Vapor Deposition) haute ou basse pression, MBE (Molecular Beam Epitaxy), LPE (liquid Phase Epitaxy) ou CBE (Chemical Beam Epitaxy).

Le(s) ruban(s) de guide actif est (sont) donc enterré (s) dans la couche de confinement 60, tel qu'illustré sur la vue en perspective de la figure 6A et sur la vue en coupe latérale de la figure 6B.

Etant donné que le premier masque 100 a été préalablement positionné sur la zone 31 réservée au composant passif, pour réaliser une empreinte du guide d'onde de type ridge à graver, il n'est pas nécessaire dans ce cas de protéger cette zone 31 par une couche de silice. De plus, le premier masque 100 étant préférablement réalisé en métal réfractaire tel que le Ti, W ou Mo ou un de leurs alliage, il favorise la nucléation des espèces en surface lors de la reprise d'épitaxie par un procédé sélectif (MOCVD, CBE, LPE) ou dans des conditions de sélectivité (MBE haute température par exemple). Dans ce cas, le premier masque sert donc de support à la croissance d'une couche supérieure polycristalline 61. Ainsi, le premier masque ayant favorisé la nucléation et la formation d'une couche polycristalline, les espèces en surface ne diffusent pas vers la zone de transition entre les composants actif et passif, si bien que l'apparition d'excroissances est évitée. D'autre part, la couche supérieure est monocristalline de part et d'autre du masque, c'est à dire au dessus de la couche d'arrêt 35 monocristalline. Cette partie monocristalline de la couche supérieure est référencée 62 sur la figure 6A.

Dans une variante de réalisation, on peut aussi réaliser le premier masque 100 sous forme de plusieurs couches de matériau réfractaire différent. Ainsi, le masque peut par exemple comporter une couche de tungstène recouvrant une première couche de titane. Dans cet exemple, le titane permet alors une meilleure adhérence du masque sur la couche 150 d'oxyde ou d'oxy-nitrure éventuellement déposée pour former une barrière de diffusion.

On peut ensuite terminer le composant actif 20 en déposant des métallisations localisées au-dessus du (des) ruban(s) de guide BRS pour former des électrodes. De plus, pour réduire les courants de fuite, on réalise une isolation latérale de la couche de confinement 60, par implantation de protons. Ces étapes de finition du composant actif 20 sont réalisées selon des techniques bien connues de l'homme de l'art. Bien sûr ces opérations peuvent être exécutées bien après, dans une étape ultérieure du procédé. Les métallisations sont référencées 75 sur les figures 7A, 9A et 9B et les zones d'isolation latérale sont référencées 70 sur les figures 7A et 9B.

A ce stade de la fabrication, le composant actif 20 comprenant un ou plusieurs rubans de guide d'onde de type BRS, est réalisé. Il faut donc ensuite réaliser le composant passif 31 et graver le(s) ruban(s) ridge. Pour cela, le composant actif 20 est protégé par un masque en silice 90 par exemple, tel qu'illustré sur la vue en coupe de la figure 7A.

La couche supérieure 62, 61, déposée sur la surface de la zone 31 durant l'opération de reprise d'épitaxie est alors enlevée par gravure. Lorsque cette couche supérieure est constituée d'une couche d'InP et d'une couche d'InGaAs, la gravure est réalisé en deux temps. Tout d'abord, une gravure sélective de la couche d'InGaAs par rapport à la couche d'InP est réalisée en utilisant une solution chimique à base par exemple d'acide sulfurique (H₂SO₄,H₂O₂ et H₂O) ou d'acide phosphorique (H₃PO₄,H₂O₂ et H₂O). Puis, une autre gravure sélective de la couche d'InP par rapport à la couche d'InGaAs est réalisée en utilisant une solution chimique à base de HCl ou de HBr par exemple.

La gravure est arrêtée grâce à la couche d'arrêt 35. Cette couche 35, déposée au préalable, constitue en effet une couche d'arrêt naturelle vis à vis de la gravure du matériau de constitution de la couche supérieure, c'est à dire de l'InP dans cet exemple. Ainsi, on retrouve intacte la surface de la zone 31 telle que réalisée lors de la première étape, sur laquelle est positionné le premier masque 100 en métal réfractaire définissant l'empreinte du guide ridge (figure 7B).

On utilise ensuite le premier masque 100 pour effectuer la gravure du (des) ruban(s) de guide d'onde de type ridge. Cette gravure est réalisée par exemple par une technique de gravure ionique (RIE) en utilisant un mélange CH₄/H₂. Le premier masque étant réalisé en matériau réfractaire, il présente en outre l'avantage d'être très résistant au bombardement ionique. Après cette gravure du (des) ruban(s) ridge on obtient donc le circuit tel que schématisé sur la figure 8.

A ce stade de la fabrication, la gravure permet de révéler différents plans cristallins du composant. Ainsi, le substrat présente latéralement, c'est à dire dans les portions situées de part et d'autre du (des) ruban(s) de guide d'onde, des plans cristallins de type (111) sortant lorsque le ruban actif est orienté (011). Ces plans de type (111) sont transférés de la couche de confinement vers le substrat au moment de la gravure RIE. De plus, la portion de la couche de confinement 60, qui prolonge le ruban formé par le masque 100 et enterre le guide d'onde de type BRS orienté selon (011), présente des plans cristallins de type (211).

La dernière étape consiste ensuite à supprimer le troisième masque en silice 90, déposé sur le composant actif 20, et le premier masque 100. Cette suppression des masques peut par exemple être effectuée au moyen d'une solution à base d'acide fluorhydrique ou par gravure plasma. Par contre, il n'est pas nécessaire d'enlever la couche d'arrêt 35 qui ne perturbe pas le fonctionnement du circuit. Le circuit fini est schématisé sur les figures 9A à 9C.

Grâce au procédé décrit selon l'invention, c'est-à-dire grâce au fait que les rubans de guide BRS et de guide ridge sont gravés successivement, et que le masque utilisé pour définir leur empreinte permet la nucléation des espèces en surface lors de la reprise d'épitaxie, l'apparition des excroissances est évitée. La qualité des guides d'onde est en outre préservée. De plus, le procédé selon l'invention est économique car il fait appel à des opérations et des équipements standards.

Ce procédé peut être appliqué à la fabrication de tous les circuits optiques sur lesquels sont intégrés des rubans de guide de type BRS gravés et enterrés, et des rubans de guide de type ridge gravés mais non enterrés.

## Revendications

1. Procédé de fabrication d'un circuit optique intégré comprenant au moins un guide d'onde gravé et enterré de type BRS, couplé avec au moins un guide d'onde gravé et non enterré de type ridge, caractérisé en ce qu'il comprend les étapes suivantes :
a- former sur un substrat (5) au moins une première (20) et une deuxième (31) zone comprenant respectivement une première (27) et une deuxième (33) couche guidante, lesdites première et deuxième couches guidantes (27, 33) étant enterrées et aboutées,
b- former, sur lesdites première et deuxième zones, un premier masque (100) pour définir l'empreinte desdits guides d'onde de type BRS et ridge,
c- protéger ladite deuxième zone (31) par un deuxième masque (50) et graver la première zone (20) pour définir le guide d'onde de type BRS,
d- enlever ledit deuxième masque (50) et faire croître une couche sur la surface des deux zones, pour former d'une part une couche de confinement (60) enterrant le guide de type BRS dans la première zone (20), et d'autre part une couche supérieure (62,61) formée sur la deuxième zone (31),
e- protéger ladite première zone (20) par un troisième masque (90), enlever par gravure la couche supérieure (62, 61) formée dans la deuxième zone (31), puis utiliser le premier masque (100) pour graver la deuxième zone (31) et définir le guide d'onde de type ridge.

2. Procédé selon la revendication 1, caractérisé en ce qu'une couche d'arrêt (35), vis à vis de la gravure du matériau de constitution de la couche supérieure (62, 61), est en outre déposée sur la deuxième zone, après la première étape a-.

3. Procédé selon l'une des revendications 1 à 2, caractérisé en ce que le premier masque (100) est réalisé dans un métal réfractaire.

4. Procédé selon la revendication 3, caractérisé en ce que le métal réfractaire utilisé pour réaliser le premier masque (100) est du titane, du tungstène, du molybdène ou un de leurs alliages.

5. Procédé selon l'une des revendications 3 à 4, caractérisé en ce que le premier masque (100) est constitué par plusieurs couches de matériau réfractaire différent.

6. Procédé selon l'une des revendications 1 à 5, caractérisé en ce qu'une couche en matériau diélectrique (150) est déposée, avant la deuxième étape b-, sur les première et deuxième zones pour former une barrière de diffusion.

7. Procédé selon la revendication 6, caractérisé en ce que la couche diélectrique (150) est constituée par un nitrure ou un oxyde ou un oxy-nitrure de silicium.
